(19) **Europäisches Patentamt**
**European Patent Office**
**Office européen des brevets**

(11) **EP 2 483 660 B1**

(12) **FASCICULE DE BREVET EUROPEEN**

(45) Date de publication et mention
de la délivrance du brevet:
**19.03.2014 Bulletin 2014/12**

(21) Numéro de dépôt: **10773124.2**

(22) Date de dépôt: **28.09.2010**

(51) Int Cl.:
***G01N 13/02*** *(2006.01)* ***G01N 21/01*** *(2006.01)*

(86) Numéro de dépôt international:
**PCT/FR2010/052030**

(87) Numéro de publication internationale:
**WO 2011/039461 (07.04.2011 Gazette 2011/14)**

(54) **PROCEDE ET DISPOSITIF DE MESURE D'UNE TENSION INTERFACIALE OU SUPERFICIELLE PAR PENETROMETRIE D'UNE INTERFACE ENTRE DEUX FLUIDES**

VERFAHREN UND VORRICHTUNG ZUM MESSEN EINER GRENZFLÄCHEN- ODER OBERFLÄCHENSPANNUNG EINER SCHNITTSTELLE ZWISCHEN ZWEI FLÜSSIGKEITEN MITTELS PENETROMETRIE

METHOD AND DEVICE FOR MEASURING AN INTERFACIAL OR SURFACE TENSION OF AN INTERFACE BETWEEN TWO FLUIDS BY PENETROMETRY

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **01.10.2009 FR 0956828**

(43) Date de publication de la demande:
**08.08.2012 Bulletin 2012/32**

(73) Titulaire: **Université de Lorraine**
**54052 Nancy Cedex (FR)**

(72) Inventeurs:
• **LI, Huai Zhi**
**F-54180 Heillecourt (FR)**

• **DIETRICH, Nicolas**
**F-31000 Toulouse (FR)**

(74) Mandataire: **Poupon, Michel**
**Cabinet Michel Poupon**
**L'Escurial - Technopole de Brabois**
**17 avenue de la Forêt de Haye**
**54519 Vandoeuvre-les-Nancy Cedex (FR)**

(56) Documents cités:
**EP-A1- 1 950 550    US-A- 4 644 782**
**US-A- 4 953 389    US-A1- 2004 070 360**

**Description**

La présente invention concerne un procédé de mesure de la tension superficielle ou interfaciale entre deux fluides et un dispositif de mise en oeuvre du procédé, ainsi qu'un dispositif de mise en oeuvre du procédé.

La tension mesurée est dite « tension superficielle » pour un système gaz-liquide, et elle est dite « tension interfaciale » pour un système liquide-liquide.

L'invention peut être mise en application dans de nombreux domaines économiques, par exemple pour l'élaboration de cosmétiques, de détergents, de produits pharmaceutiques ou chimiques, d'appareils de mesures dans des laboratoires de recherche publics ou privés, dans l'enseignement supérieur pour des travaux pratiques et de façon générale dans tous les secteurs qui nécessitent de définir les propriétés fondamentales d'une interface liquide-liquide ou liquide-gaz telles que la rigidité, la viscoélasticité, la déformabilité, etc...

De nombreuses techniques de mesure de la tension interfaciale entre fluides sont déjà connues comme par exemple :

- des mesures par visualisation (par exemple la technique de la goutte pendante)
- des mesures de force de traction par lame de Wilhelmy ou par anneau Du Noüy en platine.
- des mesures basées sur l'instabilité de Rayleigh comme la technique du jet oscillant, ou sur le changement de la polarisation des ondes électromagnétiques à l'interface, c'est la technique d'ellipsométrie.

Le document D1 (US 4 953 389) décrit un procédé de mesure d'une tension interfaciale pour les interfaces liquide-liquide ou superficielle pour les interfaces liquide-gaz, entre deux fluides d'un échantillon contenu dans une conduite comportant au moins une fenêtre en matériau transparent, et une série d'images du profil de l'interface étant acquise en temps réel par un système de prise d'images.

Certaines techniques sont basées sur l'équation de Laplace pour calculer le volume de goutte et la pression maximale de bulle. Ces techniques utilisent la numérisation et le traitement informatique comme le profil de goutte, le profil de bulle, et même l'outil microfluidique.

Malheureusement ces techniques, par leur utilisation d'un échantillon important de fluides et par la taille des dispositifs, empêchent une mesure à des températures élevées. D'autre part, le milieu liquide doit souvent être transparent. En particulier ces techniques ne s'appliquent pas ou sont trop imprécises dans le cas de liquides visqueux et/ou élastiques.

Pour remédier à ces inconvénients, l'invention propose une nouvelle technique microscopique de mesure de la tension superficielle ou interfaciale rendant possible la mesure de précision de cette grandeur à des températures élevées (supérieures à 50 °C) et vise les objectifs suivants :

- mesurer rapidement la tension interfaciale et superficielle,
- nécessiter très peu de fluide pour effectuer la mesure,
- permettre un chauffage du micro-système pour atteindre des températures élevées,
- s'appliquer à un liquide opaque et/ou visqueux.

Les objectifs d'utilisation visés ci-dessus sont très intéressants pour les applications où les liquides ont des fortes valeurs ajoutées ou présentent des phases solides à température ambiante (cosmétique, pharmacie, pétrochimie, etc...).

Tous ces objectifs sont atteints par l'invention qui consiste en un procédé de mesure d'une tension interfaciale ($\sigma$) pour les interfaces liquide-liquide ou superficielle pour les interfaces liquide-gaz, caractérisé en ce que la mesure est réalisée par pénétromètrie d'une interface entre deux fluides d'un échantillon contenu dans une conduite comportant au moins une fenêtre en matériau transparent, au moyen d'une tige déplacée à vitesse constante et de façon orthogonale à l'interface, un profil (P) de l'interface étant déformé par la pénétration de la tige et une série d'images du profil (P) étant acquise en temps réel par un système de prise d'images au cours de la déformation et de la traversée de l'interface.

L'invention propose deux formulations préférentielles pour déduire la tension ($\sigma$) de l'analyse de la déformation du profil.

L'invention concerne également une machine pour la mise en oeuvre d'un procédé de mesure d'une tension interfaciale ($\sigma$) pour les interfaces liquide-liquide ou superficielle pour les interfaces liquide-gaz, caractérisée en ce que elle comporte au moins les moyens essentiels suivants :

- une conduite avec au moins une fenêtre transparente et contenant un échantillon de mesure composé de deux fluides séparés par une interface,

- une tige déplacée à vitesse selon une direction orthogonale à l'interface, ladite tige étant amenée à déformer puis traverser l'interface en son centre,

- un moyen de prise d'images pour acquérir une série d'images numériques du profil de l'interface au cours de sa déformation.

Préférentiellement, la machine comporte un moyen de porter et maintenir la conduite à une température constante prédéterminée, qui est par exemple un module de Pelletier. Elle comporte en outre de préférence une source lumineuse pour éclairer l'interface.

On comprendra mieux l'invention à la lecture de la description ci-après faite en référence aux figures suivantes :

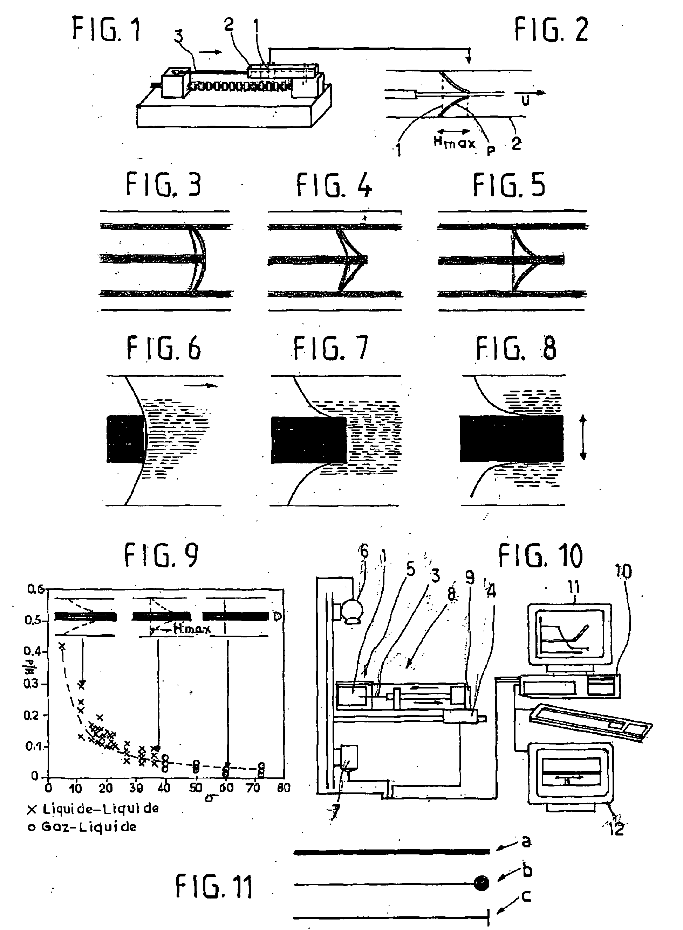

○ Figure 1 : schéma de principe d'un dispositif selon l'invention,
○ Figure 2 : vue de détail de l'interface,
○ Figures 3 à 5 : schémas visualisant la forme de l'interface au cours d'une mesure,
○ Figures 6 à 8 : validation des champs de vitesse au sein des fluides au cours d'une mesure,
○ Figure 9 : courbe de l'évolution de la déformation de l'interface en fonction de la tension interfaciale pour le dispositif de la figure 1 et à 25 ° C.
○ Figure 10 : schéma d'un dispositif de mise en oeuvre de l'invention,
○ Figure 11 : variante d'extrémités de tige.

Selon le principe de l'invention, une tension interfaciale ($\sigma$) (pour les interfaces liquide-liquide) ou superficielle (pour les interfaces liquide-gaz) est mesurée par la méthode de pénétromètrie d'une interface (1) dans les conditions suivantes :

- Une interface (1) initialement verticale entre deux liquides, ou horizontale entre un liquide et de l'air, est réalisée dans une conduite (2) (par exemple de section carrée de dimensions 5mm*5mm*10cm) (voir figure 1). Pour une conduite de grande section, la conduite doit être verticale. Par contre, les phénomènes de capillarité permettent de maintenir une interface liquide-liquide verticale dans une conduite horizontale.
- Une tige (3) de diamètre millimétrique ou submillimétrique, est déplacée par tout moyen, par exemple un moteur (4). Elle se déplace à vitesse constante et de façon orthogonale à la surface ou à l'élément de surface avec lequel elle est en contact, et elle est amenée à déformer puis traverser l'interface (1) liquide-liquide ou gaz-liquide préférentiellement, en son centre. On peut orienter horizontalement ou verticalement la conduite du moment que la tige traverse l'interface de façon orthogonale, d'où la souplesse du procédé.
- Le profil (P) de l'interface déformé par la pénétration de la tige est analysé par une caméra (7) en temps réel (voir figures 2 à 8).

La tension interfaciale ($\sigma$) est déduite de l'analyse d'image effectuée au moment de la rupture de l'interface. Cette déformation est liée à la valeur de la tension interfaciale.

La figure 9 représente l'évolution à 25° C de la distance de déformation Hmax en fonction de la tension interfaciale pour des systèmes liquide-liquide ou gaz-liquide. Une première approche permet d'évaluer rapidement la valeur de la tension interfaciale avec un écart de 20 % par rapport aux techniques classiques :

$$\frac{H_{max}}{D} = \frac{2,2}{\sigma}$$

pour le cas du diamètre de la tige D = 7.10$^{-4}$ m.
D diamètre de la tige, m
$H_{max}$ : hauteur maximale, m
$\sigma$ : tension superficielle ou interfaciale, mN/m

En affinant leur étude, les inventeurs sont arrivés à une loi beaucoup plus précise (2 % d'écart) et plus générale, grâce à la nouvelle formule suivante :

$$\sigma = 59.28 \left( \frac{D}{H_{\max}} \right)^{1/2} U^{1/8}$$

U : vitesse de la tige, mm/s

D diamètre de la tige, m

$H_{\max}$ : hauteur maximale, m

σ : tension superficielle ou interfaciale, mN/m

Ainsi la connaissance de $H_{\max}$ permet d'accéder directement à la tension interfaciale avec une très grande précision.

On décrit à présent en détail un dispositif de mise en oeuvre de ce principe de mesure (voir figure 10), donné à titre d'exemple non limitatif de mise en oeuvre.

L'interface (1) est déformée par une tige (3) reliée à un mobile de déplacement commandé par un moteur (4). La conduite (2) est thermostatée par un module de Pelletier (5) (pompe à chaleur qui -grâce à un changement de polarité-peut aussi bien être utilisé pour chauffer que pour refroidir) ou par un moyen techniquement équivalent.

La conduite (2) est en verre de section carrée (5mm*5mm*10cm) avec une paroi reliée au module de Pelletier. La tige (3) est dans un métal rigide et d'un diamètre inférieur à 1 mm, et de préférence compris entre 500 mm et 1.500 mm.

Une source lumineuse (6) éclaire l'interface et elle est à sphère intégrante afin de fournir une luminosité homogène dans toutes les directions de l'espace. Cette conception assure un éclairement uniforme de l'interface (1) et donne un contraste constant de l'image de son contour par rapport à un arrière plan.

L'optique de la caméra utilisée est de type télécentrique. Ainsi, le grandissement du système optique ne dépend pas de la distance de l'objectif à l'interface et la calibration optique peut être fait une fois pour toute, alors qu'avec tout autre type d'objectif il serait nécessaire de la reprendre avant d'effectuer toute mesure. Il est à très faible distorsion. Cette conception offre par conséquence une très grande convivialité et une souplesse d'utilisation de l'appareil tout en donnant la plus grande précision sur les mesures de la tension interfaciale et superficielle.

La caméra choisie (7) est de type CCD et conforme à la norme CCIT et analyse 25 images par seconde avec un format de 640x512 pixels.

La vitesse de déplacement de la tige est de préférence réglable par exemple de 1 à 20 mm/s en corrélation avec la rapidité des prises de vue.

Un coffret de commande (8) regroupe un contrôleur de température du module de Pelletier (5) (contrôleur PID programmable), un capteur de forces (9) branché sur le mobile, un régulateur de vitesse du mobile, ainsi que des boutons permettant un contrôle manuel du mobile permettant de commander manuellement son déplacement si nécessaire, sans passer par l'ordinateur.

L'ensemble du tensiomètre est piloté à partir d'un micro-ordinateur (10) compatible PC. Ce dernier est équipé d'une carte d'acquisition vidéo rapide, d'une carte de commande moteur et d'une carte d'acquisition pour le capteur de force et le thermocouple et comporte des écrans (11,12) de contrôle.

Un logiciel permet toutes les opérations de réglage du tensiomètre (calibration des capteurs, paramétrage du traitement d'images, etc..), l'acquisition et le traitement des données.

Des variantes de mise en oeuvre du procédé sont possibles, et en particulier on peut prévoir des variantes concernant :

- la section de la conduite qui n'est pas obligatoirement carrée.

- la forme ou le profil de l'extrémité de la tige, à titre d'exemple la figure 11 montre une tige cylindrique (a), une extrémité boule (b), une extrémité disque (c).

- le matériau de la conduite. En effet on peut utiliser une conduite en matériau non transparent mais comportant deux fenêtres transparentes, l'une pour permettre l'éclairage de l'interface, l'autre pour permettre les prises de vue. En outre si la conduite est cylindrique ou non plane, lesdites fenêtres seront planes.

- le matériau de la tige. En effet il peut être intéressant d'utiliser des matériaux hydrophobes ou hydrophiles ou présentant d'autres caractéristiques selon la nature des fluides en présence.

- le système de prise d'image en temps réel qui peut être une caméra, un appareil photographique.

Les avantages de l'invention sont notamment les suivants :

- possibilité d'utiliser un faible volume de fluide à tester lors d'une mesure : inférieur à 1 ml avec l'invention alors qu'il est de l'ordre de 10 à 50 ml avec les appareils de mesure connus. Ceci est particulièrement intéressant pour des fluides à tester de prix élevé, les volumes des deux fluides contenus dans la conduite n'étant pas nécessairement identiques.- possibilité de chauffer ou de refroidir la conduite de mesure ou l'échantillon grâce à son faible encombrement et à son accessibilité. Dans les appareils existants, il est difficile d'ajouter des moyens de réfrigération ou de chauffage.

- possibilité d'opérer la mesure sur des milieux pour lesquels la mesure était impossible avec les techniques classiques. Par exemple, la technique de la goutte d'eau n'est pas applicable avec des liquides très visqueux alors que la technique selon l'invention leur est applicable.

- possibilité d'opérer la mesure et avec une bonne précision dans une large gamme de températures de -10 °C à 100 °C (par exemple), ce que ne permettent pas les techniques antérieures.

- Possibilité de valider et visualiser les champs de vitesse des fluides en temps réel, en associant au dispositif un appareil connu sous l'appellation micro-VIP (vélocimétrie par images des particules) qui donne des images des champs de vitesse, dans un plan longitudinal de la conduite, telles que celles présentées en figures 6 à 8 à titre d'exemple. Ces images présentent un intérêt pour montrer l'influence de la viscosité du fluide lors de la déformation de l'interface.

- Souplesse du dispositif: on peut l'orienter horizontalement ou verticalement, tant que la tige traverse l'interface de façon orthogonale. En effet, pour une conduite de grande section, la conduite doit être verticale. Par contre, les phénomènes de capillarité permettent de maintenir une interface liquide-liquide verticale dans une conduite horizontale.

## Revendications

1. Procédé de mesure d'une tension interfaciale ($\sigma$) pour les interfaces (1) liquide-liquide ou superficielle pour les interfaces liquide-gaz, **caractérisé en ce que** la mesure est réalisée par pénétromètrie d'une interface (1) entre deux fluides d'un échantillon contenu dans une conduite (2) comportant au moins une fenêtre en matériau transparent, au moyen d'une tige (3) déplacée à vitesse constante et de façon orthogonale à l'interface (1), un profil (P) de l'interface étant déformé par la pénétration de la tige et une série d'images du profil (P) étant acquise en temps réel par un système de prise d'images au cours de la déformation et de la traversée de l'interface.

2. Procédé de mesure selon la revendication 1, **caractérisé en ce que** la série d'images du profil (P) est analysée et permet d'évaluer la tension ($\sigma$) à l'aide de la formule

$$\frac{H_{\max}}{D} = \frac{2,2}{\sigma}$$

pour le cas du diamètre de la tige D = $7.10^{-4}$ m.
D diamètre de la tige, m
$H_{\max}$ : hauteur maximale, m
$\sigma$ : tension superficielle ou interfaciale, mN/m

3. Procédé de mesure selon l'une des revendications 1 à 2, **caractérisé en ce que** la tension ($\sigma$) est évaluée à l'aide de la formule

$$\sigma = 59.28 \left( \frac{D}{H_{\max}} \right)^{1/2} U^{1/8}$$

U : vitesse de la tige, mm/s
D diamètre de la tige, m
$H_{\max}$ : hauteur maximale, m
σ : tension superficielle ou interfaciale, mN/m

4. Machine pour la mise en oeuvre d'un procédé de mesure d'une tension interfaciale (σ) pour les interfaces (1) liquide-liquide ou superficielle pour les interfaces liquide-gaz,

   - une conduite (2) avec au moins une fenêtre transparente et contenant un échantillon de mesure composé de deux fluides séparés par une interface (1),
   - un moyen de prise d'images pour acquérir une série d'images numériques du profil de l'interface au cours de sa déformation
   **caractérisée en ce que** elle comporte au moins les moyens essentiels suivants :

      - une tige (3) déplacée à vitesse constante selon une direction orthogonale à l'interface, ladite tige étant amenée à déformer puis traverser l'interface.

5. Machine selon la revendication 4 **caractérisée en ce qu'**elle comporte un moyen pour porter et maintenir la conduite (2) à une température constante prédéterminée.

6. Machine selon l'une des revendications 4 à 5, **caractérisée en ce qu'**elle comporte une source lumineuse (6) qui éclaire l'interface (1).

7. Machine selon l'une des revendications 5 à 6, **caractérisée en ce que** le moyen de maintien en température (2) de la conduite est un module de Pelletier.

8. Machine selon l'une des revendications 4 à 7, **caractérisée en ce que** le diamètre de la tige est inférieur à 1 mm.

9. Machine selon la revendication 8, **caractérisée en ce que** le diamètre de la tige est compris en 500 mm et 1.500 mm, bornes comprises.

10. Machine selon l'une des revendications 4 à 9, **caractérisée en ce que** la conduite a une section carrée.

11. Machine selon l'une des revendications 4 à 10, **caractérisée en ce que** le volume de l'échantillon de mesure est inférieur ou égal à 1 ml.

12. Machine selon l'une des revendications 4 à 11, **caractérisée en ce que** l'objectif du moyen de prise d'images et de type télécentrique.


**Patentansprüche**

1. Verfahren zum Messen einer Grenzflächenspannung (σ) für Flüssig-Flüssig-Grenzflächen oder einer Oberflächenspannung für Flüssig-Gasförmig-Grenzflächen, **dadurch gekennzeichnet, dass** die Messung durch Penetrometrie einer Grenzfläche (1) zwischen zwei Flüssigkeiten einer Probe erfolgt, die in einer Leitung (2) enthalten ist, welche wenigstens ein Fenster aus einem transparenten Material aufweist, mittels einer Stange (3), die mit konstanter Geschwindigkeit und rechtwinklig zu der Grenzfläche (1) bewegt wird, wobei ein Profil (P) der Grenzfläche durch die Penetration verformt wird und wobei eine Bilderfolge des Profils (P) in Echtzeit durch ein Bilderaufnahmesystem während der Deformation und dem Durchdringen der Grenzfläche aufgenommen wird.

2. Messverfahren nach Anspruch 1, **dadurch gekennzeichnet, dass** die Bilderfolge des Profils (P) analysiert wird und das Bestimmen der Spannung ($\sigma$) mit Hilfe der Formel

$$\frac{H_{\max}}{D} = \frac{2,2}{\sigma}$$

für den Fall des Durchmessers der Stange D = 7.10$^{-4}$ m mit
D Durchmesser der Stange in m
$H_{\max}$: maximale Höhe in m
$\sigma$ : Grenzflächen- oder Oberflächenspannung in mN/m.

**3.** Messverfahren nach einem der Ansprüche 1 bis 2, **dadurch gekennzeichnet, dass** die Spannung ($\sigma$) mit Hilfe der Formel

$$\sigma = 59.28 \left( \frac{D}{H_{\max}} \right)^{1/2} U^{1/8}$$

bestimmt wird mit
U : Geschwindigkeit der Stange in mm/s,
D Durchmesser der Stange in m
$H_{\max}$: maximale Höhe in m
$\sigma$ : Grenzflächen- oder Oberflächenspannung in mN/m.

**4.** Vorrichtung zum Durchführen eines Verfahrens zum Messen einer Grenzflächenspannung ($\sigma$) für Flüssig-Flüssig-Grenz-flächen oder einer Oberflächenspannung für Flüssig-Gasförmig-Grenzflächen mit

- einer Leitung (2) mit wenigstens einem transparenten Fenster, die eine Messprobe aufnimmt, die aus zwei durch eine Grenzfläche (1) getrennten Flüssigkeiten zusammengesetzt ist,
- einem Bildaufnahmemittel zum Aufnehmen einer digitalen Bilderfolge des Profils der Grenzfläche während der Deformation,

**dadurch gekennzeichnet, dass** sie wenigstens die folgenden wesentlichen Mittel aufweist:

- eine mit einer konstanten Geschwindigkeit in einer Richtung rechtwinklig auf die Grenzfläche bewegten Stange (3), wobei die Stange dazu eingerichtet ist, die Grenzfläche zu verformen und schließlich zu durchdringen.

**5.** Vorrichtung nach Anspruch 5, **dadurch gekennzeichnet, dass** sie ein Mittel zum Erwärmen und zum Halten der Leitung (2) bei einer vorbestimmten konstanten Temperatur aufweist.

**6.** Vorrichtung nach einem der Ansprüche 4 bis 5, **dadurch gekennzeichnet, dass** sie eine Lichtquelle (6) aufweist, die die Grenzfläche (1) beleuchtet.

**7.** Vorrichtung nach einem der Ansprüche 5 bis 6, **dadurch gekennzeichnet, dass** das Mittel zum Halten der Temperatur (2) der Leitung eine Pelletier-Einheit ist.

**8.** Vorrichtung nach einem der Ansprüche 4 bis 7, **dadurch gekennzeichnet, dass** der Durchmesser der Stange kleiner als 1 mm ist.

**9.** Vorrichtung nach Anspruch 8, **dadurch gekennzeichnet, dass** der Durchmesser der Stange zwischen 500 mm und 1.500 mm einschließlich der Grenzen ist.

**10.** Vorrichtung nach einem der Ansprüche 4 bis 9, **dadurch gekennzeichnet, dass** die Leitung einen quadratischen Querschnitt aufweist.

**11.** Vorrichtung nach einem der Ansprüche 4 bis 10, **dadurch gekennzeichnet, dass** das Volumen der Messprobe kleiner oder gleich 1 ml ist.

**12.** Vorrichtung nach einem der Ansprüche 4 bis 11, **dadurch gekennzeichnet, dass** das Objektiv des Mittels zum Aufnehmen der Bilder telezentrisch ist.

**Claims**

**1.** Method for measuring an interfacial tension ($\sigma$) for liquid-liquid interfaces (1) or surface tension for liquid-gas interfaces, **characterised in that** the measurement is performed by the penetrometry of an interface (1) between two fluids of a sample contained in a pipe (2) comprising at least one window made from a transparent material, using a rod (3) moving at constant speed and orthogonally to the interface (1), a profile (P) of the interface being deformed by the penetration of the rod and a series of images of the profile (P) being captured in real time by an image-capturing system during the deformation and traversing of the interface.

**2.** Measuring method according to claim 1, **characterised in that** the series of images of the profile (P) is analysed and enables the evaluation of the tension ($\sigma$) by means of the formula

$$\frac{H_{\max}}{D} = \frac{2,2}{\sigma}$$

where the diameter of the rod D = $7.10^{-4}$ m.
D diameter of the rod, m
$H_{\max}$: maximum height, m
$\sigma$: surface or interfacial tension, mN/m

**3.** Measuring method according to either of claims 1 or 2, **characterised in that** the tension ($\sigma$) is evaluated by means of the formula

$$\sigma = 59.28 \left( \frac{D}{H_{\max}} \right)^{1/2} U^{1/8}$$

U: speed of the rod, mm/s
D: diameter of the rod, m
$H_{\max}$: maximum height, m
$\sigma$: surface or interfacial tension, mN/m.

**4.** Machine for implementing a method for measuring an interfacial tension ($\sigma$) for liquid-liquid interfaces (1) or surface tension for liquid-gas interfaces,

- a pipe (2) comprising at least one transparent window and containing a measurement sample consisting of two fluids separated by an interface (1),
- an image-capturing means for capturing a series of digital images of the profile of the interface during its deformation

**characterised in that** it comprises at least the following essential means:

- a rod (3) moving at constant speed in a direction orthogonal to the interface, said rod being caused to deform and then pass through the interface.

5. Machine according to claim 4, **characterised in that** it comprises a means for bringing the pipe (2) up to a predetermined constant temperature and maintaining it at that temperature.

6. Machine according to one of claims 4 to 5, **characterised in that** it comprises a light source (6) for illuminating the interface (1).

7. Machine according to one of claims 5 to 6, **characterised in that** the means for maintaining the temperature (2) of the pipe is a Peltier module.

8. Machine according to one of claims 4 to 7, **characterised in that** the diameter of the rod is less than 1 mm.

9. Machine according to claim 8, **characterised in that** the diameter of the rod is between 500 mm and 1,500 mm, including the terminals.

10. Machine according to one of claims 4 to 9, **characterised in that** the pipe has a square cross-section.

11. Machine according to one of claims 4 to 10, **characterised in that** the volume of the measurement sample is less than or equal to 1 ml.

12. Machine according to one of claims 4 to 11, **characterised in that** the lens of the image-capturing means is telecentric.

FIG. 1 FIG. 2

FIG. 3 FIG. 4 FIG. 5

FIG. 6 FIG. 7 FIG. 8

FIG. 9 FIG. 10

X Liquide–Liquide
o Gaz–Liquide

FIG. 11

**EP 2 483 660 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4953389 A